# EUROPÄISCHE PATENTSCHRIFT

(11) **EP 1 303 676 B1**
(45) Veröffentlichungstag und Bekanntmachung des Hinweises auf die Patenterteilung: **11.01.2012**
(21) Anmeldenummer: 01969376.1
(22) Anmeldetag: 12.07.2001
(51) Int. Cl.: E04H 12/00

(54) **TURM AUS SPANNBETON-FERTIGTEILEN**
TOWER MADE OF PRESTRESSED CONCRETE PREFABRICATED ASSEMBLY UNITS
TOUR CONSTITUEE D'ELEMENTS PREFABRIQUES EN BETON PRECONTRAINT

(30) Priorität: 12.07.2000 DE 10033845
(43) Veröffentlichungstag der Anmeldung: 23.04.2003
(60) Teilanmeldung: 10182260.9
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/008074
(87) Internationale Veröffentlichungsnummer: WO 2002/004766

(56) Entgegenhaltungen:
- WO-A-86/02689
- DE-U- 29 809 541
- FR-A- 1 249 458
- FR-A- 2 775 492
- FR-A- 2 783 266

## Beschreibung

Die vorliegende Erfindung betrifft ein Verfahren zum Errichten eines Turmes aus Spannbeton-Fertigteilen und eine Vorrichtung zur vorteilhaften Ausführung des Verfahrens. Türme aus Spannbeton-Fertigteilen sind allgemein bekannt und werden für die vielfältigsten Einsatzzwecke verwendet. Als Beispiel sei hier die Verwendung als Antennenträger für Telekommunikationseinrichtungen genannt.

Als Stand der Technik hinsichtlich der Verbindung von Spannbeton-Fertigteilen sei auf FR-A-2 775 492, FR-A-1 249 458, DE-U1-298 09 541 sowie WO 86/02689 verwiesen. DE-U1-298 09 541 offenbart auch insbesondere die Verwendung von Fertigbetonteilen zur Errichtung von Türen einer Windenergieanlage.

Der Einsatz von Spannbeton-Fertigteilen hat gegenüber der Errichtung von Türmen mit einer Kletterschalung oder einer Gleitschalung den Vorteil einer wirtschaftlich günstigeren Herstellungsmöglichkeit der Fertigteile unter vorgegebenen Bedingungen. Dadurch kann ein großer Teil der Arbeit bereits fern der Baustelle ausgeführt werden. Weiterhin ist es so besser möglich, vorgegebene Qualitätsanforderungen zu erfüllen und deren Einhaltung zu überwachen und der Turm kann dann auf der Baustelle in kurzer Zeit errichtet werden.

Dazu werden die Spannbeton-Fertigteile mit in die Turmwandung eingearbeiteten Hüllrohren für die Spann-Mittel auf der Baustelle zusammengefügt. Dabei wird zur Verbindung der einzelnen Fertigteile als Segmente des Turms untereinander eine Betonmischung in die Fugen zwischen den Segmenten eingebracht, um einen flächigen Kraftschluss zwischen den Fertigteilen zu erreichen. Die in die Hüllrohre eingezogenen Spann-Mittel werden sodann gespannt und danach werden die Hüllrohre unter hohem Druck mit einer Betonschlämme verfüllt und verpresst, um eine innige Verbindung zwischen Spann-Mittel und Turm herzustellen.

Das Verpressen der Spann-Mittel in den Hüllrohren muss unter hohem Druck erfolgen, damit die Betonschlämme in den Hüllrohren aufsteigen und diese bis zur Spitze des Turmes mit dem erforderlichen Druck ausfüllen kann. Dieser erforderliche Druck kann bei 80m hohen Türmen durchaus Werte von 200 bar erreichen. Dabei besteht allerdings im Stand der Technik das Problem, dass die unter hohem Druck stehende Betonschlämme an den Stoßstellen zwischen den einzelnen Segmenten austreten kann, da der Beton dazwischen in Folge seiner Materialeigenschaften spröde und porös ist und deshalb der Übergang zwischen den Segmenten nicht zuverlässig abgedichtet ist.

Daher kann es erforderlich sein, mit dem untersten Segment beginnend am Turm aufsteigend an jeder Stoßstelle zwischen übereinander liegenden Segmenten einen Zugang für die Injektion der Betonschlämme vorzusehen und die Betonschlämme dort zuzuführen, um die Hüllrohre des jeweils darüber liegenden Segmentes zu verpressen.

Als Spann-Mittel kommen in Deutschland Spannstäbe und Spannlitzen in Betracht. Der Einsatz von Spannstäben unterliegt jedoch der Einschränkung, dass sie ausschließlich bei geraden Spannwegen einsetzbar sind. Damit sind jedoch die Möglichkeiten für die Kontur eines Turmes aus Spannbeton-Fertigteilen beim Einsatz von Spannstäben begrenzt, da diese stets geradlinig sein muss. Das heisst, die Errichtung eines konischen Turmes mit Spannstäben ist möglich, solange sich der Querschnitt des Turmes geradlinig verjüngt.

Zur Errichtung eines konischen Turmes mit geschwungener Kontur kommt daher nur der Einsatz einer Spannlitze in Betracht. Die Spannlitze wird entweder von der Spitze des Turmes aus in die Hüllrohre der Segmente durchgehend bis zum Fuß des Turmes oder vom Fuß des Turmes aus durchgehend bis zur Spitze des Turmes eingezogen. Dabei ergibt sich allerdings das Problem, dass die Spannlitze von der Turmspitze bis zum Fußbereich entlang der gekrümmten Kontur die Stoßstellen zwischen den einzelnen Segmenten überwinden muss. In Folge der Krümmung besteht jedoch stets die Gefahr, dass die Litze insbesondere an einer solchen Stoßstelle nicht der Krümmung folgt, sondern sich an der Stoßstelle festsetzt und nur unter großem Aufwand weitergeführt werden kann.

Der Erfindung liegt daher die Aufgabe zu Grunde, ein Verfahren zum Errichten eines Turmes aus Spannbeton-Fertigteilen und eine Vorrichtung zum vorteilhaften Ausführen des Verfahrens anzugeben, durch die die oben genannten Probleme im Stand der Technik beseitigt oder mindestens abgemildert werden.

Erfindungsgemäß wird die Aufgabe mit einem Turm einer Windenergieanlage mit den Merkmalen des Anspruchs 1 gelöst. Vorteilhafte Weiterbildungen sind in den Unteransprüchen beschrieben.

Erfindungsgemäß ist eine Vorrichtung vorgesehen, die trichterförmig ausgebildet ist. Dabei weist die Seite der trichterförmigen Vorrichtung mit dem kleineren Querschnitt einen Querschnitt auf, der im Wesentlichen dem Querschnitt eines Hüllrohres entspricht, wie es in die Segmente eingearbeitet ist. Die trichterförmige Vorrichtung ist oberhalb eines Hüllrohres vorgesehen und mit der Seite mit dem kleineren Querschnitt dem Hüllrohr hin ausgerichtet. Dadurch gelangt eine von der Turmspitze her eingezogene Spannlitze zunächst zu der Seite mit dem größeren Querschnitt und wird von dieser zu dem kleineren Querschnitt hin geführt. Da dieser kleinere Querschnitt im Wesentlichen dem Querschnitt eines Hüllrohres entspricht, gelangt die Spannlitze somit glatt in das Hüllrohr des nächsten, darunter liegenden Segmentes.

In einer bevorzugten Ausführungsform der Erfindung ist an der Seite der Vorrichtung mit dem kleineren Querschnitt ein rohrförmiger Abschnitt mit im Wesentlichen gleichem Querschnitt angebracht. Dieser Abschnitt hat eine vorgegebene Länge, die einerseits so bemessen ist, dass er sicher in das Hüllrohr eingreifen kann, andererseits aber der Materialaufwand und damit die Kosten innerhalb akzeptabler Grenzen bleiben.

In einer besonders bevorzugten Ausführungsform der Erfindung sind dieser rohrförmige Abschnitt und die Vorrichtung einstückig ausgeführt und im Bereich des rohrförmigen Abschnittes mit einem Außengewinde versehen, mit dem er in das Hüllrohr einschraubbar ist. Durch diese Anordnung kann eine besonders einfache und sichere Verbindung zwischen der trichterförmigen Vorrichtung und dem Hüllrohr hergestellt werden.

Die Vorrichtung ist insbesondere bevorzugt so ausgebildet, dass am äußeren Umfang eine Aufnahmemöglichkeit für z. B. eine Dichtung vorgesehen ist. Diese Aufnahmemöglichkeit kann den äußeren Rand der Vorrichtung vollständig umschließen und somit zu einem sicheren Halt der Dichtung beitragen.

Um dem Problem der austretenden Betonschlämme beim Verpressen der Hüllrohre entgegenzuwirken, ist erfindungsgemäß eine Dichtung vorgesehen, die zwischen zwei Segmenten dort eingefügt wird, wo sich die Hüllrohre in den Segmenten gegenüberstehen. Die Dichtung weist eine Höhe auf, die mindestens dem vorgesehenen Abstand der Segmente entspricht, um eine Dichtwirkung zu erzielen.

In einer besonders bevorzugten Ausführungsform der Erfindung ist die Dichtung um mehr als das Maß der Oberflächenrauhigkeit höher als der vorgegebene Abstand zwischen den Segmenten.

Da die Dichtung und die trichterförmige Vorrichtung an Positionen auf dem Umfang der Segmente vorgesehen sind, an denen sich die eingearbeiteten Hüllrohre gegenüberstehen, weist die Dichtung bevorzugt die gleiche Querschnittsform auf, wie die trichterförmige Vorrichtung.

Besonders bevorzugt vergrößert sich die lichte Weite der Dichtung zu dem unterhalb derselben angeordneten Segment hin, während die zu dem oberhalb der Dichtung angeordneten Segment weisende Seite der Dichtung wenigstens die gleiche Größe des Querschnitts in ihrer lichten Weite aufweist, wie jedes der Hüllrohre in dem Segment. Dadurch ergibt sich eine Querschnitt-Erweiterung der Dichtung zu der trichterförmigen Vorrichtung hin, so dass deren Vorteil voll genutzt werden kann.

In einer weiterhin bevorzugten Ausführungsform der Erfindung folgt die äußere Umfangsfläche der Dichtung im Wesentlichen der Veränderung der lichten Weite und verringert sich daher in Richtung auf den kleineren Querschnitt. Dadurch bleibt dieser Bereich der Dichtungswand als oberer Abschnitt der Dichtung ausreichend verformbar und wird durch innerhalb der Dichtung auftretenden Druck nach außen und damit gegen das benachbarte Segment gepresst.

Der Übergang zwischen der inneren Wandung und der äußeren Wandung des oberen Abschnittes der Dichtung ist so ausgebildet, dass er in einem spitzen Winkel zu der äußeren Wandung und einem stumpfen Winkel zu der inneren Wandung und damit im Wesentlichen vertikal verläuft.

Dadurch ergibt sich auch bei horizontal herabgedrücktem, oberen Abschnitt der Dichtung am Übergang zwischen innerer und äußerer Wandung eine die Dichtung mit ihrem oberen Abschnitt stärker gegen das Segment drückende Kraft, weil der Übergang auch in dieser Situation noch eine aufwärts verlaufende Oberfläche aufweist.

In einer insbesondere bevorzugten Ausführungsform der Erfindung ist an der Unterseite der Dichtung, der Seite mit dem größeren Querschnitt, ein Wulst angeformt, der in seinen Abmessungen und seiner Form der an der trichterförmigen Vorrichtung vorgesehenen Aufnahmevorrichtung für eine Dichtung entspricht. Dadurch kann die Dichtung sicher in ihrer Position gehalten werden, so dass ein Verrutschen der Dichtung und eine Beeinträchtigung des Montagevorgangs verhindert wird.

In einer bevorzugten Weiterbildung weist die erfindungsgemäße Dichtung oberhalb des Wulstes an ihrem äußeren Umfang nach außen gerichtete, umlaufende Auskragung auf. Diese Auskragung hat eine vorgegebene Höhe und Breite und überragt um dieses Maß den oberen, umlaufenden Rand der Vorrichtung. Diese Auskragung erhöht einerseits die Biegesteifigkeit des in der Vorrichtung aufgenommenen Wulstes und dient andererseits als Barriere für eine Verbundmasse zwischen den Segmenten, um zu verhindern, dass diese Verbundmasse während der Errichtung des Turmes auf die Oberseite der Dichtung gelangt.

Zur Vereinfachung des Arbeitsablaufes insbesondere auf der Baustelle kann gemäß einer bevorzugten Ausführungsform der Erfindung die Vorrichtung bereits bei der Herstellung der Segmente mit einer entsprechenden Ausrichtung in das Segment integriert werden. Dabei wird diese besonders bevorzugt so integriert, dass die Oberkante der Vorrichtung, also die Seite mit dem größeren Querschnitt, bündig mit der Oberseite des Segmentes abschließt.

In einer weiteren Ausführungsform der Erfindung wird während der Herstellung der Segmente die Form der trichterförmigen Vorrichtung in der Wandung des Segmentes ausgebildet. Dadurch kann bei gleicher Funktionalität einerseits das Material für die Vorrichtung und andererseits der Arbeitsschritt des Einsetzens der Vorrichtung eingespart werden.

Um zu vermeiden, dass Stoßstellen lediglich verlagert werden, ist der Abstand zwischen der Hüllrohr-seitigen Öffnung der Vorrichtung und dem benachbarten Rand des Hüllrohres vernachlässigbar klein, so dass die trichterförmige Vorrichtung und das Hüllrohr ineinander übergehen.

Um Transport- und Handhabungsprobleme zu verringern, ist in einer besonders bevorzugten Ausführungsform der Erfindung jedes Voll-Segment parallel zu seiner Hochachse in wenigstens zwei Teil-Segmente aufgeteilt.

In einer weiteren, insbesondere bevorzugten Ausführungsform der Erfindung wird bei der Errichtung des Turmes aus Segmenten als Verbundmasse zwischen den Segmenten an Stelle des porösen Beton ein Polymer wie z. B. Epoxidharz verwendet. Dieses Epoxidharz weist im ausgehärteten Zustand die gleichen Festigkeitseigenschaften wie Beton auf, ist jedoch nicht so porös und spröde, und schafft somit eine mechanisch gleichwertige aber gleichzeitig dichte Verbindung zwischen den Segmenten.

Um eine ausreichend sichere Verbindung der Segmente zu erreichen, wird die Verbundmasse bevorzugt vollflächig aufgetragen. Dabei werden allerdings die trichterförmigen Öffnungen und die Öffnungen der Hüllrohre ausgespart, um hier keine neuen Barrieren für die einzuziehende Spannlitze und die Betonschlämme zu schaffen.

In einer besonders bevorzugten Ausführungsform der Erfindung sind wenigstens drei Abstandhalter vorgesehen, die vor dem Zusammenfügen der Segmente dazwischen eingefügt werden. Diese tragen das jeweils aufliegende Segment, bis die Verbundmasse ausgehärtet ist.

Dabei sind diese Abstandhalter besonders bevorzugt aus einem Material wie z.B. Holz, das ein geringeres E-Modul aufweist, als die ausgehärtete Verbundmasse. Dadurch wird einerseits erreicht, das sich die Abstandhalter bei Unebenheiten der zueinander gewandten Flächen der Segmente entsprechend verformen und ein Abplatzen von Teilen der Wandung der Segmente verhindern. Andererseits nimmt aber nach dem Aushärten der Verbundmasse diese an Stelle der "weichen" Abstandhalter die Belastungen auf und leitet sie entsprechend ab.

Das E-Modul der Abstandhalter liegt bevorzugt in einem Bereich zwischen 3000 N/mm² und 5000 N/mm², um die erforderliche Fläche der Abstandhalter in Grenzen halten zu können, während die Verbundmasse bevorzugt ein E-Modul > 5000 N/mm² aufweist.

In einer insbesondere bevorzugten Ausführungsform der Erfindung wird es durch das Zusammenwirken der trichterförmigen Vorrichtung, der Dichtung und der Verbundmasse möglich, bei einem Turm aus Segmenten die Spannseile in die Hüllrohre einzuziehen und zu spannen und sodann vom Fuß des Turmes in die Hüllrohre z. B. eine Betonschlämme unter einem so hohen Druck hinein zu pressen, dass die Betonschlämme bis zur Turmspitze hin aufsteigt, ohne an einer Stoßstelle zwischen zwei Spannbeton-Fertigelementen auszutreten.

Vorteilhafte Weiterbildungen der Erfindung sind in den Unteransprüchen beschrieben.

Im Folgenden wird eine Ausführungsform der Erfindung anhand der beigefügten Zeichnungen näher beschrieben. Dabei zeigen:
Figur 1 eine quergeschnittene Seitenansicht einer trichterförmigen Vorrichtung;
Figur 2 eine quergeschnittene Seitenansicht einer Dichtung;
Figur 3 eine vergrößerte Darstellung des Übergangs in Fig 2;
Figur 4 ausschnittsweise zwei übereinander angeordnete und miteinander verbundene Segmente;
Figur 5 eine Draufsicht auf ein Vollsegment;
Figur 6 eine Schnittdarstellung eines Vollsegments nach
Figur 5;

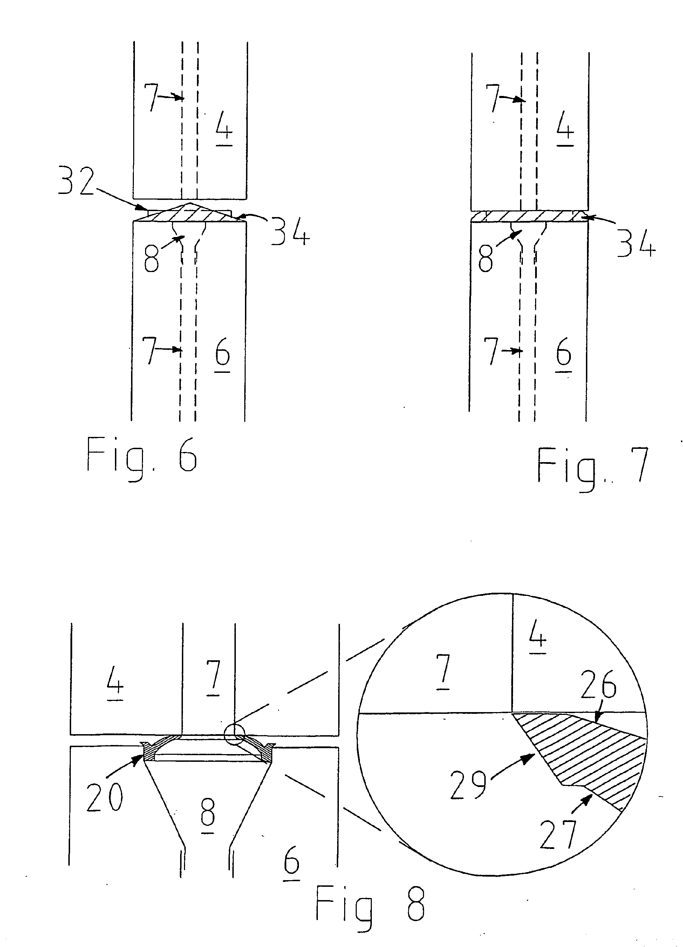

Figur 7 Segmente in eingebauter Position; und
Figur 8 einen Querschnitt eines erfindungsgemäßen Turms.

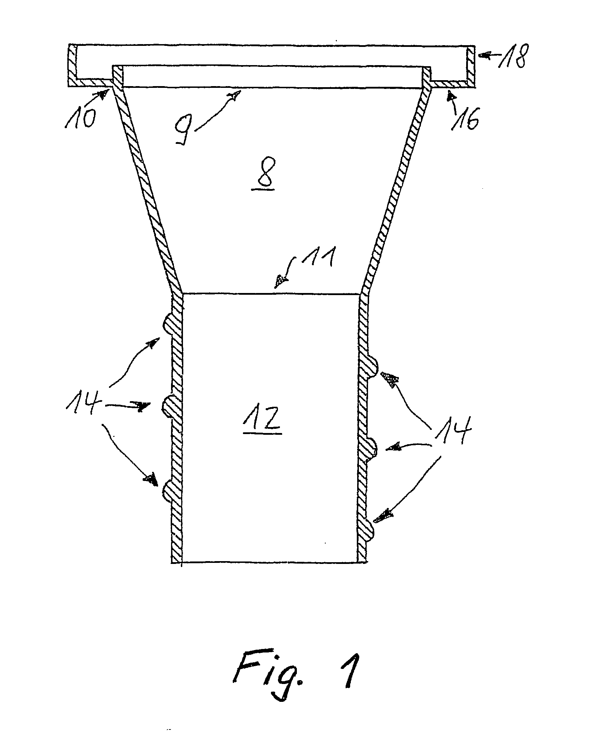

In Figur 1 ist eine Seitenansicht einer trichterförmigen Vorrichtung 8 zum Führen einer Spannlitze (nicht dargestellt) in einer Schnittdarstellung gezeigt. Der Querschnitt in der (nicht dargestellten) Draufsicht ist in diesem Ausführungsbeispiel bevorzugt rund, kann jedoch auch vieleckig sein, um z. B. eine Verdrehsicherheit einzuführen.

Der zentrale Teil dieser Vorrichtung 8 ist ein trichterförmiger Abschnitt 8 mit einer aufwärts weisenden Öffnung 9 und einer abwärts weisenden Öffnung 11. Die aufwärts weisende, kreisrunde Öffnung 9 weist bei einer Querschnittsfläche von ca. 254 cm² mit etwa 90mm einen größeren inneren Durchmesser auf, als die abwärts weisende Öffnung 11 mit einem inneren Durchmesser von etwa 53mm.

Dabei entspricht der kleinere, also der abwärts weisende Querschnitt 11 im Wesentlichen dem Querschnitt von Hüllrohren 7, die während der Herstellung der Segmente 4, 6 in deren Wandung integriert werden und zur Aufnahme der Spannlitzen (oder der Spannstäbe) vorgesehen sind. Dadurch kann eine am größeren Querschnitt 9 eintretende Spannlitze durch die Trichterform so geführt werden, dass sie glatt in das unterhalb der trichterförmigen Vorrichtung 8 anschließende Hüllrohr 7 übergehen kann.

In der Ausführungsform wurde für die trichterförmige Vorrichtung 8 ein Öffnungswinkel von etwa 40° gewählt. Dieser Öffnungswinkel kann jedoch abhängig von konstruktiven Vorgaben der Segmente in einem weiten Bereich von 10° bis 150° variieren.

An der kleineren Öffnung 11 der Vorrichtung 8 schließt ein rohrförmiger Abschnitt 12 an, der mit einem Außengewinde 14 versehen ist. Dieser Abschnitt 12 kann in ein Hüllrohr 7 eingeschraubt werden und bewirkt so einerseits eine genaue und reproduzierbare Positionierung der Vorrichtung 8 und andererseits eine noch weitergehende Führung der Spannlitze. Außerdem ist damit sichergestellt, das die Vorrichtung 8 sich unabhängig von der Transportlage nicht ungewollt vom Hüllrohr 7 lösen kann.

Der rohrförmige Abschnitt 12 weist einen Querschnitt auf, der im Wesentlichen demjenigen des Hüllrohres 7 entspricht. In diesem Ausführungsbeispiel ist er natürlich geringfügig kleiner, damit ein Einschrauben ermöglicht wird.

Der äußere Umfangsrand 10 am größeren Querschnitt 9 ist etwa 7mm aufwärts verlängert, wobei in diesem Bereich der Querschnitt jedoch konstant bleibt, d. h., der Umfangsrand 10 verläuft vertikal. An diesen Umfangsrand 10 schließt am Übergang von dem trichterförmigen Abschnitt 8 zu dem vertikal verlaufenden Teil des Umfangsrandes 10 eine im Wesentlichen horizontal verlaufende, den Umfangsrand 10 ringförmig umschließende Auflagefläche 16 an, die z. B. ein Dichtungselement 20 tragen kann. Die Breite dieser Auflagefläche 16 orientiert sich an der für die Dichtung 20 erforderlichen Auflagefläche und beträgt in der vorliegenden Ausführungsform etwa 10mm.

Ein zusätzlicher umlaufender Rand 18 ist wiederum senkrecht am äußeren Rand der Auflagefläche 16 vorgesehen und verläuft von der Auflagefläche 16 aus ca. 10mm aufwärts. Damit ergibt sich eine zusätzliche seitliche Abstützung für eine in diese aus Umfangsrand 10, Auflagefläche 16 und umlaufendem Rand 18 gebildete Aufnahme einzulegende Dichtung 20, die ein verrutschen der Dichtung 20 wirksam verhindert.

In einer alternativen, nicht dargestellten Ausführungsform kann die Auflagefläche 16 in einem spitzen Winkel zu dem Umfangsrand 10 verlaufen. Durch diese Anordnung kann bei einem einfacheren Aufbau ebenfalls eine zusätzliche Stützwirkung für eine entsprechend geformte Dichtung 20 erreicht werden.

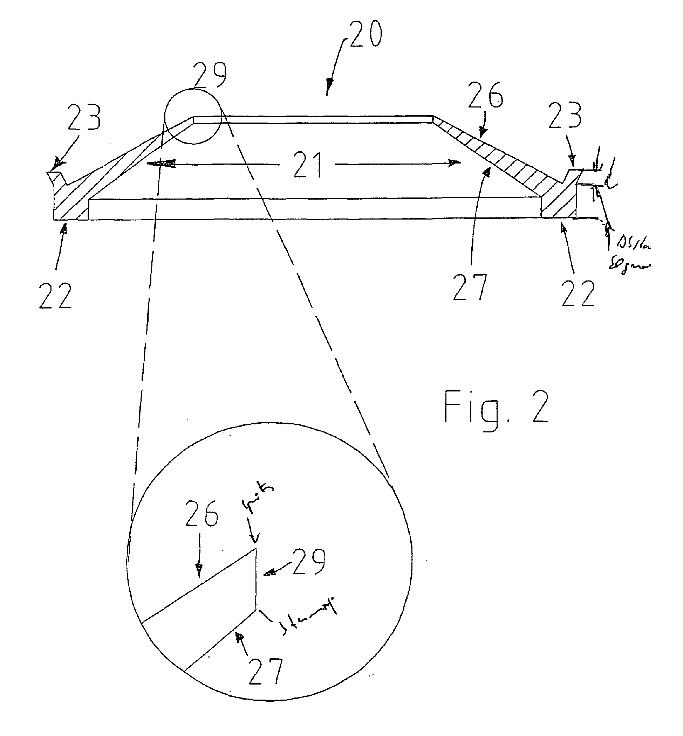

In Figur 2 ist eine Dichtung 20 in einer ersten Ausführungsform dargestellt. Diese Dichtung 20 besitzt in der (nicht dargestellten) Draufsicht ebenso wie die Vorrichtung 8 eine kreisrunden Querschnitt. In der im Querschnitt dargestellten Seitenansicht zeigt die Dichtung 20 eine sich verändernde lichte Weite 21. Diese vergrößert sich zum unteren Rand der Dichtung 20 hin. Dabei ist allerdings der Durchmesser am oberen Rand der Dichtung 20 mit etwa 70mm noch größer als der innere Durchmesser von standardmäßig verwendeten Hüllrohren 7 mit ca. 60mm. Der Innendurchmesser der Dichtung 20 beträgt an ihrem unteren Rand etwa 95mm und entspricht damit dem Außendurchmesser der Vorrichtung 8 an ihrem äußeren Umfangsrand 10.

Der äußere Umfangsrand der Dichtung 20 ist im Bereich des unteren Randes als Wulst 22 ausgebildet, dessen Abmessungen mit einer Höhe von etwa 7mm im Inneren der Dichtung, ca. 10mm Höhe am Außenumfand und einer Breite von ebenfalls etwa 10mm so gewählt sind, dass sie den Abmessungen der aus Umfangsrand 10, Auflagefläche 16 und umlaufendem Rand 18 gebildeten Aufnahme der Vorrichtung 8 entsprechen. Die Dichtung 20 passt daher genau in diese Aufnahme und zur Fixierung der Dichtung 20 kann zwischen der Vorrichtung 8 bzw. deren Auflagefläche 16 und der Dichtung 20 eine Klebstoffschicht oder ähnliches vorgesehen sein.

Die lichte Weite der Dichtung 20 verringert sich von der unteren zur oberen Seite hin. Der äußere Umfang der Dichtung 20 folgt diesem Verlauf. D. h. der äußere Umfang der Dichtung 20 verringert sich ebenfalls in deren Bereich oberhalb des Wulstes 22. Daraus ergibt sich der Vorteil, dass bei auftretendem Druck im Weg der Spannlitze und damit innerhalb der Dichtung 20, nämlich beim Verpressen der Hüllrohre 7, dieser Druck die Dichtung 20 insbesondere in diesem Bereich verformen und gegen das obere Segment 6 drücken kann, so dass der Übergang zwischen den Segmenten 4, 6 im Bereich der Hüllrohre 7 sicher abgedichtet ist.

Oberhalb des Wulstes 22 weist die Dichtung 20 an ihrem äußeren Umfang eine parallelogrammförmig ausgebildete, umlaufende Auskragung 23 auf. Diese Auskragung 23 hat eine Höhe von etwa 5mm und überragt um dieses Maß den oberen, umlaufenden Rand 18 der Vorrichtung (8). Diese Auskragung 23 erhöht einerseits die Biegesteifigkeit des in der Vorrichtung 8 aufgenommenen Wulstes 22 und dient andererseits als Barriere für die Verbundmasse 34 zwischen den Segmenten 4, 6, um zu verhindern, dass diese Verbundmasse 34 während der Errichtung des Turmes auf die Oberseite der Dichtung 20 gelangt.

Die Dichtung 20 wird zwischen zwei übereinander angeordneten Spannbeton-Fertigelementen 4, 6 im Bereich von sich einander gegenüberstehenden Hüllrohren 7 angeordnet und soll einen druckdichten Übergang zwischen Hüllrohren 7 in den Spannbeton-Fertigelementen 4, 6 schaffen. Daher weist die Dichtung 20 in einer bevorzugten Ausführungsform eine Höhe von etwa 25mm-30mm auf.

Diese Höhe ergibt sich aus der Höhe des Wulstes 22 sowie der Höhe des Abschnittes der Dichtung 20, dessen Querschnitt sich zu der kleineren Öffnung hin verjüngt. Dabei zeigt die Höhe der Auskragung 23 den vorgesehenen Abstand der Segmente 4, 6 an. Der diese Auskragung 23 überragende obere Abschnitt 25 der Dichtung 20 mit dem sich verjüngenden Abschnitt ist etwa 10mm - 15mm höher.

Beim Errichten eines Turmes aus Segmenten 4, 6 wird dieser die Auskragung 23 überragende Teil des Dichtung 20 durch das aufgesetzte Segment 6 heruntergedrückt und drückt wiederum mit seiner Rückstellkraft gegen dieses Segment 6. Dadurch ist eine erste Abdichtung zwischen den Segmenten 4, 6 hergestellt, die auch ohne bereits vorhandenen Druck im Dichtungsinneren ein Austreten der Betonschlämme verhindert.

Da der obere Dichtungsabschnitt 25 durch das aufgesetzte Segment 6 verformt wird, ist der Übergang 29 zwischen der inneren Wandung 27 und der äußeren Wandung 26 so ausgebildet, dass er in einem spitzen Winkel zu der äußeren Wandung 26 und einem stumpfen Winkel zu der inneren Wandung 27 und damit im Wesentlichen vertikal verläuft.

Dies ist in einem zur Verdeutlichung vergrößert dargestellten Kreis besser erkennbar. Hier wurde zur Verbesserung der Übersichtlichkeit nur der Übergang 29 ohne anschließende Kantenlinien dargestellt. Hier sind deutlich der spitze Winkel zwischen der äußeren Wandung 26 des oberen Abschnittes 25 der Dichtung 20 und dem Übergang 29 sowie der stumpfe Winkel zwischen der Wandung 27 und dem Übergang 29 erkennbar.

Dadurch ergibt sich auch bei horizontal herabgedrücktem, oberen Abschnitt 25 der Dichtung 20 am Übergang 29 zwischen innerer 27 und äußerer Wandung 26 eine die Dichtung 20 mit ihrem oberen Abschnitt 25 stärker gegen das Segment 6 drückende Kraft, weil der Übergang 29 auch in dieser Situation noch eine aufwärts verlaufende Oberfläche aufweist.

Nimmt man eine annähernd plane Oberfläche des oberen Segmentes 6 an, kann der obere Abschnitt 25 der Dichtung 20 nicht weiter als bis in die Horizontale herabgebogen werden. Daraus ergibt sich, dass die Dichtung 20 in jedem Fall zuverlässig gegen das obere Segment 6 abdichtet.

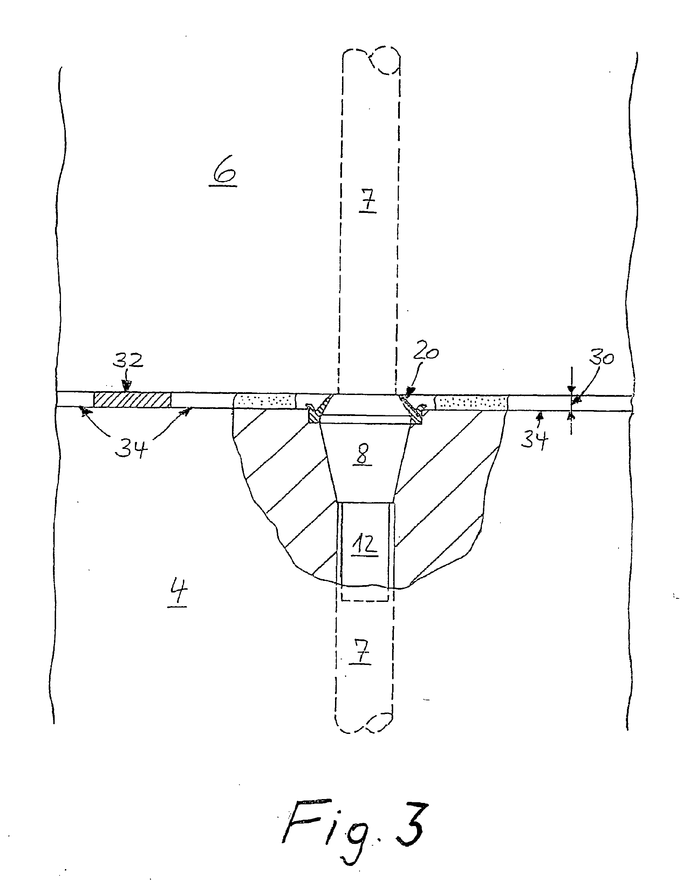

Figur 3 zeigt die Vorrichtung 8 und die darin eingesetzte Dichtung 20 in situ. Dort sind zwei übereinander angeordnete Segmente 4, 6 dargestellt, von denen das untere Segment 4 im Bereich der Vorrichtung 8 aufgebrochen ist. Die Segmente 4, 6 sind derart übereinander angeordnet, dass sich die Hüllrohre 7 in den Segmenten 4, 6 im Wesentlichen fluchtend gegenüberstehen.

Die Vorrichtung 8 ist formschlüssig in das Segment 4 eingesetzt und die Oberkante des umlaufenden Randes 18 schließt bündig mit der Oberfläche des Segmentes 4 ab. Der rohrförmige Abschnitt 12 greift in das im Segment 4 integrierte Hüllrohr 7 ein.

In den zur Aufnahme der Dichtung 20 vorgesehenen Teil der Vorrichtung 8 ist die Dichtung 20 eingesetzt und liegt mit ihrer Oberseite fest an dem oberen Segment 6 an.

Bei der Errichtung des Turmes aus Segmenten 4, 6 mit dem erfindungsgemäßen Verfahren werden zunächst auf die nach oben weisende Fläche des zuletzt eingebauten (unteren) Segmentes 4 bevorzugt drei Abstandhalter 32 mit etwa gleichem Abstand auf dem Umfang verteilt angeordnet.

Diese Abstandhalter 32 sind bevorzugt aus Holz und weisen eine Höhe von etwa 5mm (abhängig von der Oberflächenrauhigkeit der Segmente) auf, die dem vorgesehenen Abstand 30 zwischen den Segmenten 4, 6 nach der Montage entspricht. Das E-Modul von Holz in einem Bereich liegt, der einerseits gestattet, dass Holz den im Turm auftretenden Kräften einige Zeit standhalten kann, andererseits jedoch bewirkt, dass Unebenheiten der einander gegenüberliegenden Oberflächen der Segmente 4, 6 sich in das Holz eindrücken und somit Abplatzungen an den Segmenten 4, 6 vermieden werden.

Dabei kann durch eine geeignete Wahl der Höhe der Abstandhalter 32 entsprechend den unvermeidbaren Fertigungsungenauigkeiten der Segmente 4, 6 eine Nivellierung der Segmente 4, 6 erreicht werden.

Daran anschließend wird eine Verbundmasse 34 auf dieser Fläche flächendeckend aufgetragen. Dabei werden die Positionen, an denen sich die Hüllrohre 7 in den Segmenten 4, 6 bzw. das Hüllrohr 7 im oberen Segment 6 und die Vorrichtung 8 mit der Dichtung 20 im unteren Segment 4 gegenüberliegen, beim Auftragen der Verbundmasse 34 ausgespart, indem die Verbundmasse 34 bis an die Auskragung 23 heran aufgetragen wird.

Die flächendeckend aufgetragene Verbundmasse 34 ist bevorzugt ein Epoxidharz und wird mindestens in einer Schichtdicke von etwa 5mm aufgetragen, die im Wesentlichen dem vorgesehenen Abstand 30 zwischen den Segmenten 4, 6 entspricht.

Das als Nächstes einzubauende Segment 6 wird so auf dem unteren Segment 4 platziert, dass die Hüllrohre 7 miteinander eine Flucht bilden. Dabei lagert das obere Segment 6 zunächst auf den drei Abstandhaltern 32, die die Kräfte zwischen den Segmenten 4, 6 übertragen, bis die Verbundmasse 34 ausgehärtet ist.

In dem Maße, in dem die Verbundmasse 34 aushärtet, erfolgt die Kraftübertragung zwischen den Segmenten 4, 6 zunehmend durch die Verbundmasse 34. Da die Festigkeitseigenschaften der Verbundmasse 34 im ausgehärteten Zustand denen von Beton entsprechen, ergibt sich nach dem Aushärten der Verbundmasse 34 eine kraftschlüssige Verbindung zwischen den Segmenten 4, 6 auf dem größten Teil der einander zugewandten Flächen der Segmente 4, 6 (ausgespart bleiben die Bereiche der Übergänge zwischen den Hüllrohren 7).

Nachdem die Verbundmasse 34 ausgehärtet ist, werden alle Kräfte zwischen den Spannbeton-Fertigelementen 4, 6 durch die Verbundmasse 34 übertragen und die Abstandhalter 32 werden nicht mehr belastet.

Wie bereits beschrieben wird auf den vorbeschriebenen Spannbeton-Turm ein Stahlaufsatz aufgesetzt, auf dem dann das gesamte Maschinenhaus der Windenergieanlage zur Anlage kommt. Der Stahlaufsatz auf dem Spannbeton-Turmteil weist unterseitig einen umlaufenden Befestigungsflansch auf. Der Stahlaufsatz wird zunächst an mehreren, zum Beispiel 4 Gewindestangen befestigt, bis die endgültige Befestigung montiert ist. Diese besteht darin, dass die im Turm verlaufenden Spannlitzen auch durch diesen Flansch verlaufen und oberhalb des Flansches die Spannschlösser für die Spannlitzen angebracht werden.

Besteht ein Ringelement aus mehreren Teilsegmenten (eines Schusses), so dass beispielsweise ein Teilsegment im Profil einen Halbkreis bildet, werden diese Teilsegmente miteinander verbunden. Dazu wird bei der Herstellung der Teilsegmente eine sogenannte Rückhängebewehrung eingearbeitet. Diese Rückhängebewehrung, eine Verlängerung der in dem Segment eingearbeiteten Bewehrung, steht aus dem fertigen Teilsegment an dessen Stirnseiten über die Höhe des Segmentes verteilt U-förmig derart hervor, dass die an den Stirnseiten sichtbaren Elemente sprossenartig übereinander angeordnet sind.

Weiterhin sind in der gegenüberliegenden Stirnseite des benachbarten Teilsegmentes (flache) Ausnehmungen vorgesehen, in welche die Rückhängebewehrung eingreifen kann. In der Einbausituation greifen die Rückhängebewehrungen der benachbarten Teilsegmenten demnach kammartig ineinander. Die Übergänge zwischen den Teilsegmenten eines Schusses werden dann mit einem schnell abbindenden Beton ausgegossen.

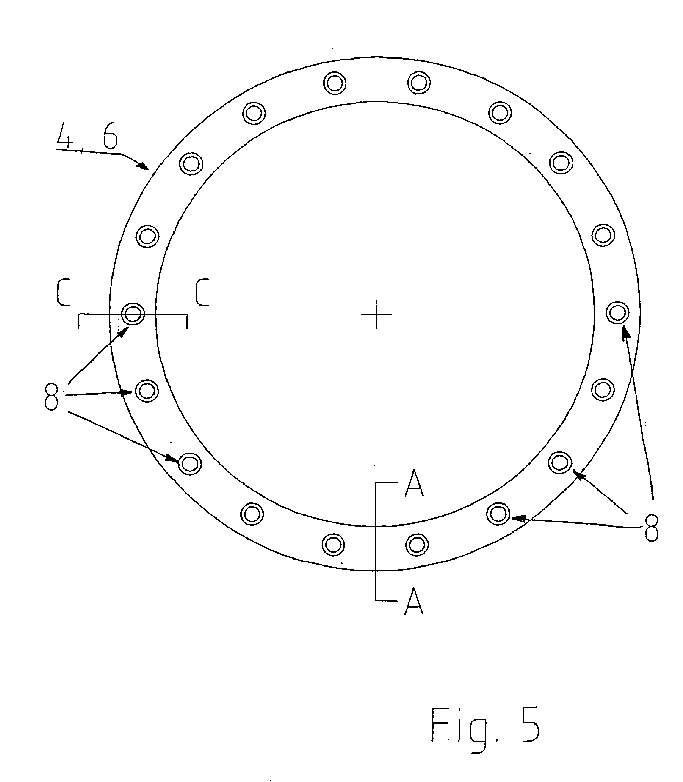

Figur 5 zeigt eine Draufsicht auf ein Vollsegment eines Spannbeton-Turmes mit den Führungsstrichtern 8. In dieser Figur sind zwei Schnitte angedeutet, nämlich A und C, die in den nachfolgenden Figuren dargestellt sind.

Figur 6 zeigt eine Darstellung im Schnitt A-A in Figur 5 nach dem Vorbereiten des unteren Segmentes 6, aber vor dem Aufsetzen des oberen Segmentes 4. In dieser Figur sind ebenso wie in Figur 7 Führungstrichter 8 und Hüllrohre 7 in den Segmenten 4, 6 verdeckt angedeutet. In dem Spalt zwischen den Segmenten 4, 6 ist ein Abstandhalter 32 sowie die Verbundmasse 34 dargestellt, die in dieser Form aufgetragen wird.

In Figur 7 sind die Segmente 4, 6 in ihrer Einbausituation gezeigt. Die Verbundmasse 34 hat sich im Wesentlichen über die Spaltbreite verteilt und die seitlich hervorquellende Verbundmasse 34 kann einfach mit einer Maurerkelle o. ä. entfernt werden. Das obere Segment 4 ruht auf dem Abstandhalter 32.

Die Dichtung 20 ist in diesen Figuren der Übersichtlichkeit halber nicht dargestellt. Um auch hier die Funktion der Dichtung 20 zu verdeutlichen, ist in Figur 8 ein Schnitt C-C in Figur 5 dargestellt. Hier wurde die Verbundmasse 34 sowie der Abstandhalter 32 fortgelassen. Die Figur zeigt, wie die Dichtung 20 in ihrem oberen Abschnitt durch das obere Segment 4 heruntergedrückt wird.

Die Ausschnitt-Vergrößerung zeigt, dass selbst bei einem in die horizontale herabgedrückten oberen Abschnitt der Dichtung der Übergang 29 durch den spitzen Winkel mit der Oberseite der Dichtung 20 und dem stumpfen Winkel der Unterseite 27 der Dichtung 20 aufwärts verläuft. Bei einer Druckbeaufschlagung im Dichtungsinneren wird dieser Abschnitt daher zuverlässig an das obere Segment 4 gepresst.

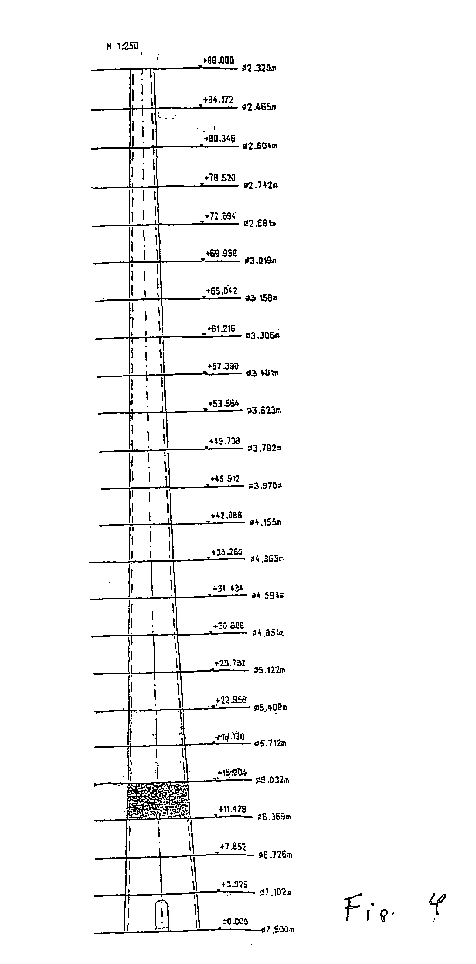

Figur 4 zeigt den Querschnitt eines erfindungsgemäßen Turms, welcher im dargestellten Beispiel aus 23 Teilen besteht, wobei jedes Teil im Wesentlichen über eine Höhe von 3,80 m bis 4,00 m verfügt. Wie zu erkennen, verfügt der Turm über ein sich verjüngendes Turmprofil, das heißt, dass der Turm am Boden breiter ist als im oberen Turmbereich. Das Turmprofil ist hierbei insgesamt gekrümmt, das heißt, dass die sich gegenüberliegenden Turmwandungen weder parallel zueinander angeordnet sind, noch in einem festen Winkel zueinander angeordnet sind, sondern dass das Profil bzw. die äußere Kontur leicht gekrümmt ist. Die Zahlen neben der Turmdarstellung geben einerseits die Höhe der unteren Fläche eines Turmsegmentes über dem Erdboden sowie den Durchmesser des Turmsegmentes an dieser Stelle (rechte Zeilenangabe) an. Die Zahlen sind selbstverständlich beispielhaft und keinesfalls auf die Erfindung beschränkend zu verstehen.

## Patentansprüche

1. Turm einer Windenergieanlage, mit
einer Vielzahl von aufeinander angeordneten Fertigteilsegmenten (4, 6), welche mittels Spannelementen miteinander verspannt sind, wobei jedes Fertigteilsegment ein Ringelement aufweist, **dadurch gekennzeichnet, dass**
das Ringelement eine Führungsvorrichtung (8) zum Führen einer Spannlitze an Übergängen zwischen Fertigteilsegmenten (4, 6) aufweist, wobei die Führungsvorrichtung (8) trichterförmig ausgebildet ist und ein erstes Ende mit einem kleineren Querschnitt (11) und ein zweites Ende mit einem größeren Querschnitt (9) aufweist, wobei das erste Ende der Führungsvorrichtung mit dem kleineren Querschnitt (11) im Wesentlichen den gleichen Querschnitt wie ein Hüllrohr (7) aufweist, welches in die Fertigteilsegmente (4, 6) eingearbeitet ist, wobei die Führungsvorrichtung (8) an ihrem ersten Ende einen rohrförmigen Abschnitt (12) aufweist, welcher innerhalb des in einem Fertigteilsegment eingearbeiteten Hüllrohres (7) liegt, und wobei aufeinanderliegende Segmente mittels einer Verbundmasse miteinander verbunden sind.

2. Turm nach Anspruch 1, **dadurch gekennzeichnet, dass** die Führungsvorrichtung (8) einen vorgegebenen Öffnungswinkel aufweist.

3. Turm nach Anspruch 2,
**dadurch gekennzeichnet, dass** der Öffnungswinkel der Führungsvorrichtung (8) in einem Bereich zwischen 10° und 150' liegt.

4. Turm nach einem der vorstehenden Ansprüche,
**dadurch gekennzeichnet, dass** das zweite Ende der Führungsvorrichtung (8) äußere Abmessungen aufweist, die kleiner als die Wanddicke eines Segmentes (4, 6) sind.

5. Turm nach einem der vorstehenden Ansprüche,
**dadurch gekennzeichnet, dass** der rohrförmige Abschnitt (12) im Wesentlichen den gleichen Querschnitt wie das erste Ende (11) der Führungsvorrichtung (8) aufweist und in Durchgangsrichtung anschließt.

6. Turm nach Anspruch 5,
**dadurch gekennzeichnet, dass** die Führungsvorrichtung (8) und der rohrförmige Abschnitt (12) einstückig ausgeführt sind.

7. Turm nach einem der Ansprüche 5 oder 6,
**dadurch gekennzeichnet, dass** der rohrförmige Abschnitt (12) eine vorgegebene Länge aufweist.

8. Turm nach Anspruch 7,
**dadurch gekennzeichnet, dass** die Länge des rohrförmigen Abschnittes (12) mindestens 20mm beträgt.

9. Turm nach einem der Ansprüche 5 bis 8,
**dadurch gekennzeichnet, dass** der rohrförmige Abschnitt (12) mit einem Außengewinde (14) versehen ist.

10. Turm nach einem der vorstehenden Ansprüche,
**dadurch gekennzeichnet, dass** der äußere Umfang des zweiten Endes (9) von einer in einem vorgegebenen Winkel dazu verlaufenden Auflagefläche (16) mindestens teilweise umschlossen ist.

11. Turm nach Anspruch 10,
**dadurch gekennzeichnet, dass** am äußeren Rand der Auflagefläche (16) ein im wesentlichen aufwärts verlaufender Rand (18) mit einer vorgegebenen Höhe vorgesehen ist.

12. Turm nach Anspruch 1, **gekennzeichnet durch** eine Dichtung zum Schaffen eines druckdichten Übergangs zwischen zwei übereinander angeordneten Fertigteilsegmenten (4, 6), wobei die Dichtung (20) eine Höhe aufweist, welche mindestens einem vorgesehenen Abstand (30) der aufeinander angeordneten Fertigteilsegmente (4, 6) entspricht.

13. Turm nach Anspruch 12,
**dadurch gekennzeichnet, dass** die Dichtung (20) im Wesentlichen die gleiche Querschnittsform aufweist, wie das erste Ende (11) der Führungsvorrichtung (8).

14. Turm nach Anspruch 12 oder 13,
**dadurch gekennzeichnet, dass** sich eine lichte Weite (21) der Dichtung (20) in axialer Richtung verändert.

15. Turm nach Anspruch 14,
**dadurch gekennzeichnet, dass** sich die lichte Weite (21) der Dichtung (20) zu dem unterhalb der Dichtung (20) angeordneten Fertigteilsegment (4, 6) hin vergrößert.

16. Turm nach einem der Ansprüche 12 bis 15,
**dadurch gekennzeichnet, dass** die Wanddicke der Dichtung (20) ein vorgegebenes Maß nicht überschreitet.

17. Turm nach Anspruch 16,
**dadurch gekennzeichnet, dass** sich die Wanddicke der Dichtung (20) entlang der Höhe der Dichtung (20) verändert.

18. Turm nach Anspruch 16 oder 17,
**dadurch gekennzeichnet, dass** die Dichtung (20) einen oberen Abschnitt (25) aufweist, wobei der Übergang (29) zwischen einer äußeren Wandung (26) und einer inneren Wandung (27) des oberen Abschnitts (25) in einem spitzen Winkel zu der äußeren Wandung (26) und in einem stumpfen Winkel zu der inneren Wandung (27) verläuft.

19. Turm nach einem der Ansprüche 12 bis 18,
**dadurch gekennzeichnet, dass** der zu dem oberhalb der Dichtung (20) angeordneten Fertigteilsegment (4, 6) hin weisende Öffnungs-Querschnitt der Dichtung (20) mindestens die gleiche Größe aufweist, wie in die Fertigteilsegmente (4, 6) eingearbeitete Hüllrohre (7).

20. Turm nach einem der Ansprüche 12 bis 19,
**dadurch gekennzeichnet, dass** die Dichtung (20) einen unteren Abschnitt mit einer größeren lichten Weite aufweist, wobei ein Wulst (22) an dem unteren Abschnitt angeformt ist.

21. Turm nach Anspruch 20,
**dadurch gekennzeichnet, dass** die Querschnittsform und Abmessungen des Wulstes (22) der von dem äußeren Umfangsrand (10) der Öffnung des zweiten Endes (9) der Führungsvorrichtung (8), der Auflagefläche (16) und dem die Auflagefläche umschließenden Rand (18) gebildeten Querschnittsform und deren Abmessungen im Wesentlichen entsprechen.

22. Turm nach einem der Ansprüche 12 bis 21,
**dadurch gekennzeichnet, dass** der äußere Umfangsrand der Dichtung (20) oberhalb des Wulstes (22) eine nach außen gerichtete Auskragung (23) mit vorgegebener Höhe und Breite aufweist.

23. Turm nach Anspruch 22,
**dadurch gekennzeichnet, dass** die Auskragung (23) im Wesentlichen parallelogrammförmig ausgebildet ist.

24. Turm nach Anspruch 1, **gekennzeichnet durch** mindestens ein Fertigteilsegment mit einem oder mehreren in die Wandung integrierten Hüllrohren (7),
wobei die Führungsvorrichtung (8) derart in das Fertigteilsegment integriert ist, dass das erste Ende (11) der Führungsvorrichtung (8) mit dem kleineren Querschnitt (11) zum dem in die Wandung integrierten Hüllrohr (7) weist und das zweite Ende mit dem größeren Querschnitt (9) zu dem beim Errichten des Turmes nach oben weisenden Rand des Fertigteilsegmentes (4, 6) weist.

25. Turm nach Anspruch 24,
**dadurch gekennzeichnet, dass** das zweite Ende der Führungsvorrichtung (8) mit dem größeren Querschnitt (9) mit der beim Errichten des Turmes nach oben weisenden Fläche des Fertigteilsegmentes (4, 6) im Wesentlichen bündig abschließt.

26. Turm nach Anspruch 24 oder 25,
**dadurch gekennzeichnet, dass** das Fertigteilsegment (4, 6) parallel zur Hochachse in wenigstens zwei separate Segmente aufgeteilt ist.

27. Turm nach Anspruch 1,
**dadurch gekennzeichnet, dass** jedes Ringelement aus wenigstens zwei Teilsegmenten besteht, wobei ein Teilsegment ein Teilringelement aufspannt.

28. Turm nach Anspruch 27,
**dadurch gekennzeichnet, dass** als Spannelemente mindestens ein seilartiges Spannelement zum Verspannen der Segmente (4, 6) vorgesehen ist, welche durch einen Hohlraum innerhalb der Wandung der Ringelemente geführt werden.

29. Turm nach einem der Ansprüche 1 - 28,
**dadurch gekennzeichnet, dass** ein Hohlraum innerhalb der Wandung der Ringelemente nach Aufstellung des Turms der Windenergieanlage mit einem Baustoff, vorzugsweise Beton, gefüllt wird.

30. Turm nach einem der Ansprüche 1 - 29,
**dadurch gekennzeichnet, dass** im Übergang von einem unteren zu einem daraufliegenden Fertigteil-Segment ein Element zur Aufnahme des Spannstahlelementes vorgesehen ist, wobei das Aufnahmeteil in seinem oberen Rand einen größeren Durchmesser aufweist als an seinem unteren Rand.

31. Turm einer Windenergieanlage nach einem der Ansprüche 1 - 30, wobei sich der Turm vom Boden aus nach oben hin verjüngt,
**dadurch gekennzeichnet, dass** der Turm ein gekrümmtes Turmprofil aufweist.

32. Turm nach Anspruch 31,
**dadurch gekennzeichnet, dass** der Turm aus einer Vielzahl von Fertigteil-Segmenten besteht, die ihrerseits eine gekrümmte Kontur oder lineare Kontur aufweisen.

33. Verfahren zum Errichten eines Turmes einer Windenergieanlage aus Fertigteilsegmenten, mit den Schritten:
Verspannen von aufeinander angeordneten Fertigteilsegmenten (4, 6) durch Spannelemente, wobei jedes Fertigteilsegment (4, 6) ein Ringelement aufweist, welches eine Führungsvorrichtung (8) zum Führen einer Spannlitze an Übergängen zwischen Fertigteilsegmenten (4, 6) aufweist, wobei die Führungsvorrichtung (8) trichterförmig ausgebildet ist und ein erstes Ende mit einem kleineren Querschnitt (11) und ein zweites Ende (9) mit einem größeren Querschnitt aufweist, wobei das erste Ende der Führungsvorrichtung im Wesentlichen den gleichen Querschnitt wie ein Hüllrohr aufweist, welches in die Fertigteilsegmente (4, 6) eingearbeitet ist, wobei die Führungsvorrichtung (8) an ihrem ersten Ende einen rohrförmigen Abschnitt (12) aufweist, welche innerhalb des Hüllrohres (7) angeordnet ist, und
Auftragen einer Verbundmasse (34) vor dem Zusammenfügen der Segmente der Fertigteilsegmente (4, 6) auf die nach oben weisenden Flächen (36) des jeweils unteren Fertigteilsegmentes, wobei die Verbundmasse (34) ein Polymer darstellt.

34. Verfahren nach Anspruch 33,
**dadurch gekennzeichnet, dass** die Schichtdicke der Verbundmasse (34) im Wesentlichen dem vorgegebenen Abstand (30) zwischen den übereinander angeordneten Fertigteil-Segmenten (4, 6) entspricht.

35. Verfahren nach Anspruch 34,
**dadurch gekennzeichnet, dass** die Schichtdicke der Verbundmasse (34) wenigstens 2mm beträgt.

36. Verfahren nach einem der Ansprüche 33 bis 35,
**dadurch gekennzeichnet, dass** die Verbundmasse (34) an der Luft aushärtet.

37. Verfahren nach einem der Ansprüche 33 bis 36,
**dadurch gekennzeichnet, dass** die Verbundmasse (34) vollflächig aufgetragen wird.

38. Verfahren nach einem der Ansprüche 33 bis 37,
**dadurch gekennzeichnet, dass** die Öffnungen der in die Fertigteil-Segmente (4, 6) eingearbeiteten Hüllrohre (7) und Vorrichtungen (8) bei dem Auftragen der Verbundmasse (34) ausgespart werden.

39. Verfahren nach einem der Ansprüche 33 bis 38,
**dadurch gekennzeichnet, dass** zwischen den Fertigteil-Segmenten (4, 6) mindestens drei Abstandhalter (32) eingefügt werden.

40. Verfahren nach Anspruch 39,
**dadurch gekennzeichnet, dass** die Abstandhalter (32) eine Materialdicke aufweisen, die im Wesentlichen dem vorgegebenen Abstand (30) zwischen den Fertigteil-Segmenten (4, 6) entspricht.

41. Verfahren nach einem der Ansprüche 39 oder 40,
**dadurch gekennzeichnet, dass** die Abstandhalter (32) ein vorgegebenes E-Modul aufweisen.

42. Verfahren nach einem der Ansprüche 39 bis 41,
**dadurch gekennzeichnet, dass** das E-Modul der verwendeten Abstandhalter (32) geringer ist, als das E-Modul der ausgehärteten Verbundmasse (34).

43. Verfahren nach einem der Ansprüche 39 bis 42,
**dadurch gekennzeichnet, dass** die Abstandhalter (32) aus Holz sind.

## Claims

1. A tower of a wind power installation, comprising
a plurality of mutually superposed prefabricated segments (4, 6) which are braced together by means of tensioning elements, each prefabricated segment having a ring element, **characterised in that**
the ring element has a guiding device (8) for guiding a tensioning wire at transitions between prefabricated segments (4, 6), the guiding device (8) being of a funnel-shaped configuration and having a first end of a smaller cross-section (11) and a second end of a larger cross-section (9), the first end of the guiding device of the smaller cross-section (11) being of substantially the same cross-section as a jacket tube (7) which is incorporated into the prefabricated segments (4, 6), the guiding device (8) having at its first end a tubular portion (12) which lies inside the jacket tube (7) incorporated into a prefabricated segment, and superposed segments being joined to one another by means of a joining compound.

2. A tower according to claim 1,
**characterised in that** the guiding device (8) has a predetermined flare angle.

3. A tower according to claim 2,
**characterised in that** the flare angle of the guiding device (8) is in a range of between 10° and 150°.

4. A tower according to any one of the preceding claims,
**characterised in that** the second end of the guiding device (8) has external dimensions that are smaller than the wall thickness of a segment (4, 6).

5. A tower according to any one of the preceding claims,
**characterised in that** the tubular portion (12) has substantially the same cross-section as the first end (11) of the guiding device (8) and adjoins in the through-direction.

6. A tower according to claim 5,
**characterised in that** the guiding device (8) and the tubular portion (12) are made in one piece.

7. A tower according to either of claims 5 and 6,
**characterised in that** the tubular portion (12) has a predetermined length.

8. A tower according to claim 7,
**characterised in that** the length of the tubular portion (12) is at least 20 mm.

9. A tower according to any one of claims 5 to 8,
**characterised in that** the tubular portion (12) is provided with a male screw-thread (14).

10. A tower according to any one of the preceding claims,
**characterised in that** the outer periphery of the second end (9) is at least partially surrounded by a support surface (16) extending at a predetermined angle relative thereto.

11. A tower according to claim 10,
**characterised in that** provided at the outer edge of the support surface (16) there is a substantially upwardly extending edge (18) of a predetermined height.

12. A tower according to claim 1, **characterised by** a seal for providing a pressure-tight transition between two mutually superposed prefabricated segments (4, 6), the seal (20) being of a height that corresponds at least to an intended spacing (30) between the mutually superposed prefabricated segments (4, 6).

13. A tower according to claim 12,
**characterised in that** the seal (20) has substantially the same cross-section as the first end (11) of the guiding device (8).

14. A tower according to claim 12 or 13,
**characterised in that** an inside width (21) of the seal (20) changes in the axial direction.

15. A tower according to claim 14,
**characterised in that** the inside width (21) of the seal (20) increases towards the prefabricated segment (4, 6) disposed beneath the seal (20).

16. A tower according to any one of claims 12 to 15,
**characterised in that** the wall thickness of the seal (20) does not exceed a predetermined dimension.

17. A tower according to claim 16,
**characterised in that** the wall thickness of the seal (20) changes along the height of the seal (20).

18. A tower according to claim 16 or 17,
**characterised in that** the seal (20) has an upper portion (25), the transition (29) between an outside wall (26) and an inside wall (27) of the upper portion (25) extending at an acute angle to the outside wall (26) and at an obtuse angle to the inside wall (27).

19. A tower according to any one of claims 12 to 18,
**characterised in that** the opening cross-section of the seal (20) facing towards the prefabricated segment (4, 6) disposed above the seal (20) is at least the same size as jacket tubes (7) incorporated into the prefabricated segments (4, 6).

20. A tower according to any one of claims 12 to 19,
**characterised in that** the seal (20) has a lower portion of a greater inside width, a bead (22) being formed on the lower portion.

21. A tower according to claim 20,
**characterised in that** the cross-sectional shape and dimensions of the bead (22) substantially correspond to the cross-sectional shape formed by the outer peripheral edge (10) of the opening of the second end (9) of the guiding device (8), the support surface (16) and the edge (18) surrounding the support surface, and substantially correspond to the dimensions thereof.

22. A tower according to any one of claims 12 to 21,
**characterised in that** the outer peripheral edge of the seal (20) above the bead (22) has an outwardly pointing projection (23) of a predetermined height and width.

23. A tower according to claim 22,
**characterised in that** the projection (23) has a substantially parallelogram-shaped configuration.

24. A tower according to claim 1, **characterised by** at least one prefabricated segment with one or more jacket tubes (7) integrated into the wall, the guiding device (8) being integrated into the prefabricated segment in such a way that the first end (11) of the guiding device (8) of the smaller cross-section (11) faces towards the jacket tube (7) integrated into the wall and the second end of the larger cross-section (9) faces towards that edge of the prefabricated segment (4, 6) which faces upwards when the tower is erected.

25. A tower according to claim 24,
**characterised in that** the second end of the guiding device (8) of the larger cross-section (9) terminates substantially flush with that surface of the prefabricated segment (4, 6) which faces upwards when the tower is erected.

26. A tower according to claim 24 or 25,
**characterised in that** the prefabricated segment (4, 6) is divided parallel to the vertical axis into at least two separate segments.

27. A tower according to claim 1,
**characterised in that** each ring element consists of at least two sub-segments, a sub-segment spanning a sub-ring element.

28. A tower according to claim 27,
**characterised in that**, as tensioning elements, at least one cable-like tensioning element for bracing the segments (4, 6) together is provided, which tensioning elements are passed through a cavity within the wall of the ring elements.

29. A tower according to any one of claims 1 to 28,
**characterised in that** a cavity within the wall of the ring elements is filled with a building material, preferably concrete, after the tower of the wind power installation has been put up.

30. A tower according to any one of claims 1 to 29,
**characterised in that** an element for receiving the tensioning steel element is provided in the transition from a lower prefabricated segment to a prefabricated segment disposed thereon, the receiving part being of a larger diameter in its upper edge than at its lower edge.

31. A tower of a wind power installation according to any one of claims 1 to 30, the tower tapering from the ground upwards,
**characterised in that** the tower has a curved tower profile.

32. A tower according to claim 31,
**characterised in that** the tower consists of a plurality of prefabricated segments which for their part have a curved contour or a linear contour.

33. A method for erecting a tower of a wind power installation from prefabricated segments, comprising the steps of:
bracing mutually superposed prefabricated segments (4, 6) together by tensioning elements, each prefabricated segment (4, 6) having a ring element which has a guiding device (8) for guiding a tensioning wire at transitions between prefabricated segments (4, 6), the guiding device (8) having a funnel-shaped configuration and having a first end of a smaller cross-section (11) and a second end (9) of a larger cross-section, the first end of the guiding device being of substantially the same cross-section as a jacket tube which is incorporated into the prefabricated segments (4, 6), the guiding device (8) having at its first end a tubular portion (12) which is disposed inside the jacket tube (7), and
applying a joining compound (34), before assembly of the segments of the prefabricated segments (4, 6), to the upwardly facing surfaces (36) of the respectively lower prefabricated segment, the joining compound (34) being a polymer.

34. A method according to claim 33,
**characterised in that** the layer thickness of the joining compound (34) substantially corresponds to the predetermined spacing (30) between the mutually superposed prefabricated segments (4, 6).

35. A method according to claim 34,
**characterised in that** the layer thickness of the joining compound (34) is at least 2 mm.

36. A method according to any one of claims 33 to 35,
**characterised in that** the joining compound (34) cures in air.

37. A method according to any one of claims 33 to 36,
**characterised in that** the joining compound (34) is applied over the full surface area.

38. A method according to any one of claims 33 to 37,
**characterised in that** the openings of the jacket tubes (7) and devices (8) incorporated into the prefabricated segments (4, 6) are left open when the joining compound (34) is applied.

39. A method according to any one of claims 33 to 38,
**characterised in that** at least three spacers (32) are inserted between the prefabricated segments (4, 6).

40. A method according to claim 39,
**characterised in that** the spacers (32) are of a material thickness that substantially corresponds to the predetermined spacing (30) between the prefabricated segments (4, 6).

41. A method according to either of claims 39 and 40,
**characterised in that** the spacers (32) have a predetermined modulus of elasticity.

42. A method according to any one of claims 39 to 41,
**characterised in that** the modulus of elasticity of the spacers (32) used is lower than the modulus of elasticity of the cured joining compound (34).

43. A method according to any one of claims 39 to 42,
**characterised in that** the spacers (32) are made of wood.

## Revendications

1. Mât d'une éolienne, comprenant :
une pluralité de segments préfabriqués (4, 6) agencés l'un sur l'autre, qui sont haubanés l'un avec l'autre au moyen d'éléments d'haubanage, dans lequel chaque segment préfabriqué présente un élément annulaire, **caractérisé en ce que**
l'élément annulaire présente un dispositif de guidage (8) pour guider un toron d'haubanage dans les passages entre des segments préfabriqués (4, 6), dans lequel le dispositif de guidage (8) est conformé en entonnoir et présente une première extrémité avec une section transversale plus petite (11) et une seconde extrémité avec une section transversale plus grande (9), dans lequel la première extrémité du dispositif de guidage avec la section transversale plus petite (11) présente sensiblement la même section transversale qu'un tube de gainage (7), qui est enfoncé dans les segments préfabriqués (4, 6), dans lequel le dispositif de guidage (8) présente à sa première extrémité une section tubulaire (12) qui se situe dans le tube de gainage (7) enfoncé dans un segment préfabriqué et dans lequel des segments superposés sont raccordés l'un à l'autre au moyen d'une masse composite.

2. Mât selon la revendication 1,
**caractérisé en ce que** le dispositif de guidage (8) présente un angle d'ouverture prédéfini.

3. Mât selon la revendication 2,
**caractérisé en ce que** l'angle d'ouverture du dispositif de guidage (8) se situe dans une plage comprise entre 10° et 150 °.

4. Mât selon l'une quelconque des revendications précédentes,
**caractérisé en ce que** la seconde extrémité du dispositif de guidage (8) présente des dimensions externes qui sont inférieures à l'épaisseur de paroi d'un segment (4, 6).

5. Mât selon l'une quelconque des revendications précédentes,
**caractérisé en ce que** la section tubulaire (12) présente sensiblement la même section transversale que la première extrémité (11) du dispositif de guidage (8) et s'y raccorde dans le sens de passage.

6. Mât selon la revendication 5,
**caractérisé en ce que** le dispositif de guidage (8) et la section tubulaire (12) sont formés d'un seul tenant.

7. Mât selon l'une quelconque des revendications 5 ou 6,
**caractérisé en ce que** la section tubulaire (12) présente une longueur prédéfinie.

8. Mât selon la revendication 7,
**caractérisé en ce que** la longueur de la section tubulaire (12) est d'au moins 20 mm.

9. Mât selon l'une quelconque des revendications 5 à 8,
**caractérisé en ce que** la section tubulaire (12) est pourvue d'un filet externe (14).

10. Mât selon l'une quelconque des revendications précédentes,
**caractérisé en ce que** la circonférence externe de la seconde extrémité (9) est entourée au moins en partie par une surface d'appui (16) qui fait un angle prédéfini avec elle.

11. Mât selon la revendication 10,
**caractérisé en ce qu'**un bord (18) s'étendant sensiblement vers le haut à une hauteur prédéfinie est prévu sur le bord externe de la surface d'appui (16).

12. Mât selon la revendication 1, **caractérisé par** un joint étanche pour créer un passage étanche à la pression entre deux segments préfabriqués (4, 6) superposés, dans lequel le joint étanche (20) présente une hauteur qui correspond au moins à une distance (30) prévue des segments préfabriqués (4, 6) agencés l'un sur l'autre.

13. Mât selon la revendication 12,
**caractérisé en ce que** le joint étanche (20) présente sensiblement la même forme en section transversale que la première extrémité (11) du dispositif de guidage (8).

14. Mât selon la revendication 12 ou 13,
**caractérisé en ce qu'**une largeur intérieure (21) du joint étanche (20) varie dans la direction axiale.

15. Mât selon la revendication 14,
**caractérisé en ce que** la largeur intérieure (21) du joint étanche (20) augmente vers le segment préfabriqué (4, 6) agencé en dessous du joint étanche (20).

16. Mât selon l'une quelconque des revendications 12 à 15,
**caractérisé en ce que** l'épaisseur de paroi du joint étanche (20) ne dépasse pas une mesure prédéfinie.

17. Mât selon la revendication 16,
**caractérisé en ce que** l'épaisseur de paroi du joint étanche (20) varie sur la hauteur du joint étanche (20).

18. Mât selon la revendication 16 ou 17,
**caractérisé en ce que** le joint étanche (20) présente une section supérieure (25), dans lequel le passage (29) entre une paroi externe (26) et une paroi interne (27) de la section supérieure (25) fait un angle aigu avec la paroi externe (26) et un angle obtus avec la paroi interne (27).

19. Mât selon l'une quelconque des revendications 12 à 18,
**caractérisé en ce que** la section transversale d'ouverture du joint étanche (20) dirigée vers le segment préfabriqué (4, 6) agencé au-dessus du joint étanche (20) présente au moins la même dimension que les tubes de gainage (7) enfoncés dans les segments préfabriqués (4, 6).

20. Mât selon l'une quelconque des revendications 12 à 19,
**caractérisé en ce que** le joint étanche (20) présente une section inférieure ayant une largeur intérieure plus grande, dans lequel un renflement (22) est formé sur la section inférieure.

21. Mât selon la revendication 20,
**caractérisé en ce que** la forme en section transversale et les dimensions du renflement (22) correspondent sensiblement à la forme en section transversale formée par le bord de circonférence externe (10) de l'ouverture de la seconde extrémité (9) du dispositif de guidage (8), la surface d'appui (16) et le bord (18) entourant la surface d'appui et à ses dimensions.

22. Mât selon l'une quelconque des revendications 12 à 21,
**caractérisé en ce que** le bord de circonférence externe du joint étanche (20) présente, au-dessus du renflement (22), une saille (23) dirigée vers l'extérieur et ayant une hauteur et une largeur prédéfinies.

23. Mât selon la revendication 22,
**caractérisé en ce que** la saillie (23) est conformée sensiblement en parallélogramme.

24. Mât selon la revendication 1, **caractérisé par** au moins un segment préfabriqué ayant un ou plusieurs tubes de gainage (7) intégrés à la paroi, dans lequel le dispositif de guidage (8) est intégré au segment préfabriqué de sorte que la première extrémité (il) du dispositif de guidage (8) avec la section transversale plus petite (11) soit tournée vers le tube de gainage (7) intégré à la paroi et que la seconde extrémité avec la section transversale plus grande (9) soit tournée vers le bord du segment préfabriqué (4, 6) dirigé vers le haut lors de l'élévation du mât.

25. Mât selon la revendication 24,
**caractérisé en ce que** la seconde extrémité du dispositif de guidage (8) avec la section transversale plus grande (9) se termine sensiblement à fleur avec la surface du segment préfabriqué (4, 6) dirigée vers le haut lors de l'élévation du mât.

26. Mât selon la revendication 24 ou 25,
**caractérisé en ce que** le segment préfabriqué (4, 6) est réparti parallèlement à l'axe de la hauteur en au moins deux segments séparés.

27. Mât selon la revendication 1,
**caractérisé en ce que** chaque segment annulaire est constitué d'au moins deux segments partiels, un segment partiel bloquant un segment annulaire partiel.

28. Mât selon la revendication 27,
**caractérisé en ce que** l' on prévoit comme éléments de blocage au moins un élément de blocage de type câble pour haubanner les segments (4, 6) , qui est guidé à travers un espace creux dans la paroi des éléments annulaires.

29. Mât selon l'une quelconque des revendications 1 à 28,
**caractérisé en ce qu'**un espace creux dans la paroi des éléments annulaires est rempli, après montage du mât de l'éolienne, par un matériau, de préférence du béton.

30. Mât selon l'une quelconque des revendications 1 à 29,
**caractérisé en ce qu'**il est prévu dans le passage d'un segment préfabriqué inférieur à un segment préfabriqué superposé un élément pour recevoir l'élément de blocage en acier, dans lequel la partie de réception présente, dans son bord supérieur, un diamètre plus grand que sur son bord inférieur.

31. Mât d'une éolienne selon l'une quelconque des revendications 1 à 30, dans lequel le mât s'amincit du sol vers le haut,
**caractérisé en ce que** le mât présente un profil incurvé.

32. Mât selon la revendication 31,
**caractérisé en ce que** le mât est constitué d'une pluralité de segments préfabriqués qui présentent pour leur part un contour incurvé ou un contour linéaire.

33. Procédé pour élever un mât d'une éolienne constituée de segments préfabriqués, comprenant les étapes consistant à :
haubanner des segments préfabriqués (4, 6) agencés l'un sur l'autre par des éléments de blocage, dans lequel chaque segment préfabriqué (4, 6) présente un élément annulaire, qui comporte un dispositif de guidage (8) pour guider un toron de blocage au niveau de passages entre des segments préfabriqués (4, 6), dans lequel le dispositif de guidage (8) est conformé en entonnoir et présente une première extrémité de section transversale plus petite (11) et une seconde extrémité (9) de section transversale plus grande, dans lequel la première extrémité du dispositif de guidage présente sensiblement la même section transversale qu'un tube de gainage, qui est enfoncé dans les segments préfabriqués (4, 6), dans lequel le dispositif de guidage (8) présente, à sa première extrémité, une section tubulaire (12) qui est agencée dans le tube de gainage (7), et
appliquer une masse composite (34) avant l'assemblage des segments préfabriqués (4, 6) sur les surfaces (36) dirigées vers le haut du segment préfabriqué respectivement inférieur, la masse composite (34) représentant un polymère.

34. Procédé selon la revendication 33,
**caractérisé en ce que** l'épaisseur de couche de la masse composite (34) correspond sensiblement à la distance prédéfinie (30) entre les segments préfabriqués (4, 6) superposés.

35. Procédé selon la revendication 34,
**caractérisé en ce que** l'épaisseur de couche de la masse composite (34) est d'au moins 2 mm.

36. Procédé selon l'une quelconque des revendications 33 à 35,
**caractérisé en ce que** la masse composite (34) durcit à l'air.

37. Procédé selon l'une quelconque des revendications 33 à 36,
**caractérisé en ce que** la masse composite (34) est appliquée sur toute la surface.

38. Procédé selon l'une quelconque des revendications 33 à 37,
**caractérisé en ce que** les ouvertures des tubes de gainage (7) enfoncés dans les segments préfabriqués (4, 6) et des dispositifs (8) sont ménagées lors de l'application de la masse composite (34).

39. Procédé selon l'une quelconque des revendications 33 à 38,
**caractérisé en ce qu'**au moins trois écarteurs (32) sont insérés entre les segments préfabriqués (4, 6).

40. Procédé selon la revendication 39,
**caractérisé en ce que** les écarteurs (32) présentent une épaisseur de matériau qui correspond sensiblement à la distance prédéfinie (30) entre les segments préfabriqués (4, 6).

41. Procédé selon l'une quelconque des revendications 39 ou 40,
**caractérisé en ce que** les écarteurs (32) présentent un module d'élasticité E prédéfini.

42. Procédé selon l'une quelconque des revendications 39 à 41,
**caractérisé en ce que** le module d'élasticité E des écarteurs (32) utilisés est plus faible que le module d'élasticité E de la masse composite (34) durcie.

43. Procédé selon l'une quelconque des revendications 39 à 42,
**caractérisé en ce que** les écarteurs (32) sont en bois.
